Europäisches Patentamt

European Patent Office

Office européen des brevets

(11) Veröffentlichungsnummer: **0 159 958**
A1

## (12) EUROPÄISCHE PATENTANMELDUNG

(21) Anmeldenummer: 85730021.4

(22) Anmeldetag: 06.02.85

(51) Int. Cl.⁴: **F 16 L 3/08**, F 16 L 55/02

(30) Priorität: 28.03.84 DE 3411989

(43) Veröffentlichungstag der Anmeldung: 30.10.85
Patentblatt 85/44

(84) Benannte Vertragsstaaten: **AT CH DE FR GB LI**

(71) Anmelder: **Combé, Hubert, Prinz-Handjery-Strasse 39, D-1000 Berlin 37 (DE)**

(72) Erfinder: **Combé, Hubert, Prinz-Handjery-Strasse 39, D-1000 Berlin 37 (DE)**
Erfinder: **Neumann, Peter, Charlottenstrasse 7, D-1000 Berlin 46 (DE)**

(74) Vertreter: **Bergmann, Jürgen, Dipl.-Ing. et al, Patentanwälte PFENNING, MEINIG & PARTNER Kurfürstendamm 170, D-1000 Berlin 15 (DE)**

(54) Rohrschellenisoliereinlage.

(57) Zwischen einem Rohr und einer Rohrschelle werden zur Erzielung von Schalldämmung und Wärmedämmung vorzugsweise schlauchförmige Isolierblöcke (1) aus Gummi eingeschoben, die individuell den Lasten und Schwingungs-verhältnissen angepasst werden können. Die Isolierblöcke (1) werden über das Rohrschellenprofil geschoben und um-schliessen das gesamte Rohrschellenprofil.

EP 0 159 958 A1

ACTORUM AG

## Rohrschellenisoliereinlage

Die Erfindung bezieht sich auf eine Rohrschellenisoliereinlage gemäß dem Oberbegriff des Anspruchs 1.

Das DE-GM 74 12 348 zeigt schwere quadratisch geformte Schellen für den Schiffsbau, die an vier Seiten mit Kunststoffeinlagen versehen sind, die ihrerseits primenförmige Ausnehmungen haben und sich so dem Rohr anpassen. Die Einlagen dienen dazu, die Angleichung an die verschiedenen Rohrdurchmesser zu erleichtern. Es handelt sich um schwere Spezialschellen für den Schiffsbau, die im normalen Rohrleitungsbau keine Anwendung finden. Sie sind nicht auf Schalldämpfung ausgelegt.

Eine weitere Spezial-Rohrschellenkonstruktion dient zur Halterung von rechteckigen oder runden Antennen-Hohlprofilen. Sie ist in der DE-OS 12 34 288

3

beschrieben. Die eigentlichen Halteschellen, die aus quadratisch geformten oder rund geformten Stahlschellen bestehen, sind mit diagonal angeordneten Kunststoffedern aus Polyäthylen versehen. Diese Federn können sich unter Last nur in einer Richtung verändern. Sie sind aufgabengemäß nicht für Schallschutz vorgesehen, sondern ermöglichen das Gleiten der empfindlichen dünnwandigen Antennen-Hohlprofile in deren Längsrichtung. Einlagen dieser Art können im Rohrleitungsbau schon deshalb nicht verwendet werden, weil die Gewichte der Rohrleitungen einschließlich der von ihnen zu transportierenden Medien viel zu hoch sind.

Die im Rohrleitungsbau verwendeten Rohrschelleneinlagen sind u.a. beschrieben in der DE-PS 23 66 213, der DE-AS 23 11 057, den DE-OSen 27 10 601, 21 62 662, 27 10 601 und in den DE-GMn 1 987 450, 74 05 253 und 74 26 865.

Allen diesen Rohrschellenisoliereinlagen ist gemeinsam, daß sie sich um den gesamten inneren Umfang der Rohrschelle erstrecken, einige haben Profilierungen, andere haben in ihrem Innern Hohlräume. Ein Teil dieser Rohrschellenisoliereinlagen ist mit Haltelippen versehen, die um die Kanten der Schellen herumgreifen, so daß die Rohrschellenisoliereinlagen immer durch die Haltelippen ihre dem Rohrschellendurchmesser entsprechend gekrümmte Form erhalten. Wieder andere sind mit der Rohrschelle verklebt. Alle genannten Rohrschellenisoliereinlagen bestehen aus Gummi. Die Rohrschellenisoliereinlagen aus Gummi werden im allgemeinen mittels Extrudern gepreßt.

Diese Rohrschellenisoliereinlagen weisen jedoch folgende Nachteile auf:

1) Bei Verwendung von Haltelippen und bei kleinen Rohrdurchmessern haben mittels Strangrohrpressen hergestellte Rohrschellenisoliereinlagen das Bestreben, sich nach einer Weile wieder in ihre alte gerade Lage zurückzubiegen und sich von der Rohrschelle herunterzukrempeln. Profile, die in Spritzformen und passend zum Schellendurchmesser hergestellt werden, sind zu teuer.

2) Bei eingeklebten Schellenisolierprofilen besteht die Gefahr, daß die im Gummi befindlichen Weichmacher den Klebstoff unwirksam machen. Dieser Effekt tritt besonders bei höheren Rohrtemperaturen leicht auf. Die Gummieinlagen verlieren dann ihren Halt und rutschen aus dem Zwischenraum zwischen Rohr und Schelle heraus.

3) Wenn starke Schiebekräfte auf das Rohr wirken und die Schelle aufgrund ihrer Konstruktion mit dem Rohr nicht mitwandern kann, besteht die Gefahr, daß nicht nur die geklebten, sondern auch die mit Haltelippen versehenen Rohrschellenisoliereinlagen herausgedrückt werden. Aus diesem Grund sind Rohrschellen häufig so profiliert, daß sich Bördel, Sicken oder Kanten ergeben, die die dazu passenden Schellenisolierprofile formschlüssig gegen Herausdrücken sichern. Nachteilig hierbei ist aber, daß die Profilie-

rungen aus fertigungstechnischen und Kosten-gründen dünnes Schellenmaterial voraus-setzen mit dadurch bedingter geringer Tragkraft der Schelle. Ferner sind die Werkzeugkosten höher als bei Schellen ohne Profilierung. Häufig können derart profilierte Schellen ohne Isoliereinlage nicht verwendet werden.

4) Treten höhere Rohrtemperaturen auf, muß Gummi einer größeren Shorehärte gewählt werden. Dadurch wird die Rohrschellenisoliereinlage noch steifer, und die genannten Nachteile verstärken sich.

5) Vergleicht man einen Querschnitt durch das Rohr und die Rohrschelle nebst rings-umlaufender eingelegter Rohrschellenisolier-einlage im unbelasteten und im belasteten Zustand, so wird sich eine sichelförmige Verdrängungsfläche im Bereich der Rohrschellenisoliereinlage finden. Je mehr das Rohr gewichtsbedingt in die Rohrschellenisoliereinlage einsinkt, desto größer wird die Auflagefläche und desto mehr wird das Einsinken erschwert. Dies leuchtet auch ein, wenn man bedenkt, daß bei der oft verwendeten Gummi-Shorehärte von 45$^{o}$ etwa 0,5 kg/mm$^2$ an Last aufgenommen werden können, d.h. daß z.B. 50 kg Rohrgewicht bereits mit 100 mm$^2$ Gummifläche aufgenommen werden können, während bei den bekannten Rohrschellenisoliereinlagen die tatsächliche Auflagefläche einer entsprechenden Schelle ein Vielfaches dieses Wertes beträgt.

Ein kürzerer Federweg der Last hat aber in jedem Fall eine höhere Eigenfrequenz des Masse-Federsystems zur Folge als bei einem langen Federweg, denn die Frequenz richtet sich bekanntlich nach der Formel

$$\omega = \frac{1}{2\pi} \cdot \sqrt{\frac{c \cdot g}{f}}$$

$\omega$ = Frequenz (Hz)

$c$ = Federkonstante $\frac{kg}{mm}$

$f$ = Federweg mm

$g$ = 9.810 mm/s²

Dies ist aber unerwünscht, denn die ideale Eigenfrequenz von 50 Hz erfordert bei den in Frage kommenden Materialien einen längeren Federweg.

Dies ist offenbar auch der Grund dafür, weshalb aller Hersteller derartiger ringumlaufender Rohrschellenisoliereinlagen diese mit Profilierungen oder mit Hohlräumen versehen oder Schaumgummi verwenden, denn auf diese Weise läßt sich der Federweg vergrößern.

Das System hat jedoch den gravierenden Nachteil, daß die Stärke des das ganze Innere der Schelle ausfüllenden Rohrschellenisolierprofils vom tiefsten Auflagepunkt des Rohres bestimmt wird. Dort darf das Profil nur um 40 % seiner Höhe gepreßt werden, sonst verliert es materialbedingt seine Form und Federkraft, und dort nähert sich das Rohr am stärksten an die Rohrschelle an. Das bedeutet, daß etwa 90 % des Gesamtprofils wegen der verbleibenden 10 % viel zu dick ausgeführt werden müssen, was eine erhebliche Materialverschwendung ist.

6) Daß ein ringsum zwischen Rohr und Rohrschelle eingelegtes Rohrschellenprofil den Schall schlechter dämpft, als wenn der Zwischenraum mit Luft ausgefüllt wäre, bedarf keiner weiteren Erläuterung.

Das DE-GM 18 48 044 beschreibt eine Rohrschelle, die an den das Rohr umfassenden Teilen der Rohrschelle mit einzelnen Dämpfungskörpern in Blockform versehen ist, wobei die dem Rohr zugewandte Seite jedes Dämpfungskörpers profiliert ist. Die Dämpfungskörper weisen einen rechteckigen C-förmigen Querschnitt auf und die einzelnen Teile des Dämpfungskörpers umgreifen die schmalen Seiten der rechteckförmigen Schelle. Die nach außen gerichtete, dem Rohr nicht zugewandte Fläche der Rohrschelle liegt dabei weitgehend frei und wird nur an den Seiten von den Rändern des Dämpfungskörpers umgriffen. Wenn zwischen Rohrschelle und Rohr Verschiebungen auftreten, die insbesondere bei fest montierten Rohrschellen aufgrund von Rohrausdehnungen vorkommen, so verschiebt sich der Dämpfungskörper, so daß die die Rohrschelle umgreifenden Ränder sich ebenfalls verschieben, wobei sie sich von der Rohrschelle lösen können und der Dämpfungskörper abfällt. Eine große Gefahr des Abfallens der Dämpfungskörper von den Rohrschellen besteht auch schon bei der Montage, da üblicherweise erst die Schellen installiert werden und dann die Rohre eingelegt und durchgeschoben werden. Es ist offensichtlich, daß bei dieser Montageweise ein großer Teil der vorgesehenen Dämpfungskörper auf den Schellen verloren gehen können.

Der beanspruchten Erfindung liegt somit die Aufgabe zugrunde, eine gattungsgemäße Rohrschellenisoliereinlage zu schaffen, die die genannten Nachteile nicht aufweist. Diese Aufgabe wird durch die Merkmale gelöst, die im kennzeichnenden Teil des Anspruchs 1 angegeben sind. Vorteilhafte Ausbildungen dieser Einlage ergeben sich aus den Unteransprüchen.

Die zu dämpfenden Schwingungen des Rohrnetzes werden am wirksamsten mit einer Eigenfrequenzabstimmung um 50 Hz herum gedämpft.

Es ist bereits erwähnt worden, daß die tatsächlich erforderlichen Auflageflächen der Rohrschellenisoliereinlage klein sein dürfen, weil die zulässige Lastaufnahme des Rohrschellenisoliermaterials mehr als 0,5 kg/mm$^2$ beträgt. Beispielsweise bei Anordnung von zwei Isolierblöcken beiderseits des Rohrtiefpunktes, d.h. in einem Winkel von 45$^\circ$ zur senkrechten Mittelachse des Rohrquerschnitts, hat die entstehende Verdrängungsfläche bei Vergleich des unbelasteten und des belasteten Rohrquerschnitts kein sichelförmiges, sondern ein rechteckiges Profil. Eine ungleichmäßige Belastung dieser beiden Rohrschellenisolierblöcke findet dann nicht statt. Der Federweg wird größer, und die dem Gummi innewohnende Federwirkung wird voll ausgenutzt. Die Eigenfrequenz des Massefedersystems kann individuell der gewünschten Eigenfrequenz von 50 Hz angeglichen werden.

Ein weiterer Vorteil der Erfindung ist der, daß man die tragenden Rohrschellenisolierblöcke eine größere Shorehärte wählen kann. Dies ermöglicht eine weitaus größere Wärmebeständigkeit des Gummis, und zwar ohne die Schalldämmung nachteilhaft zu beeinträchtigen. Die Schalldämmung ist vom Federweg unter der zugehörigen Last, nicht aber von der Härte des zwischengelegten Gummis abhängig.

Gummi der nun möglich gewordenen Shorehärte von ca. 60$^{\circ}$ läßt sich besonders preisgünstig und mit gleichbleibender Qualität herstellen.

Um den Federweg bei kleinen Lasten zu vergrößern, können die Rohrschellenisolierblöcke mit einer Profilierung versehen werden, wodurch ihre Federkonstante bei gleichen Abmessungen des Isolierblocks verringert wird. Kleinere Last und kleinere Federkonstante ergeben dann wieder die gewünschte Eigenfrequenz.

Die Erfindung wird im folgenden anhand in den Figuren dargestellter Ausführungsbeispiele näher beschrieben. Es zeigen:

Fig. 1    eine Ansicht einer normalen Rohrschelle mit 4 eingezeichneten Rohrschellenisoliereinlagen 1 in Form von schlauchförmigen Blöcken,

Fig. 2    eine erste Ausführungsform des schlauchförmigen Isolierblocks, und

Fig. 3    eine zweite Ausführungsform
des Isolierblocks.

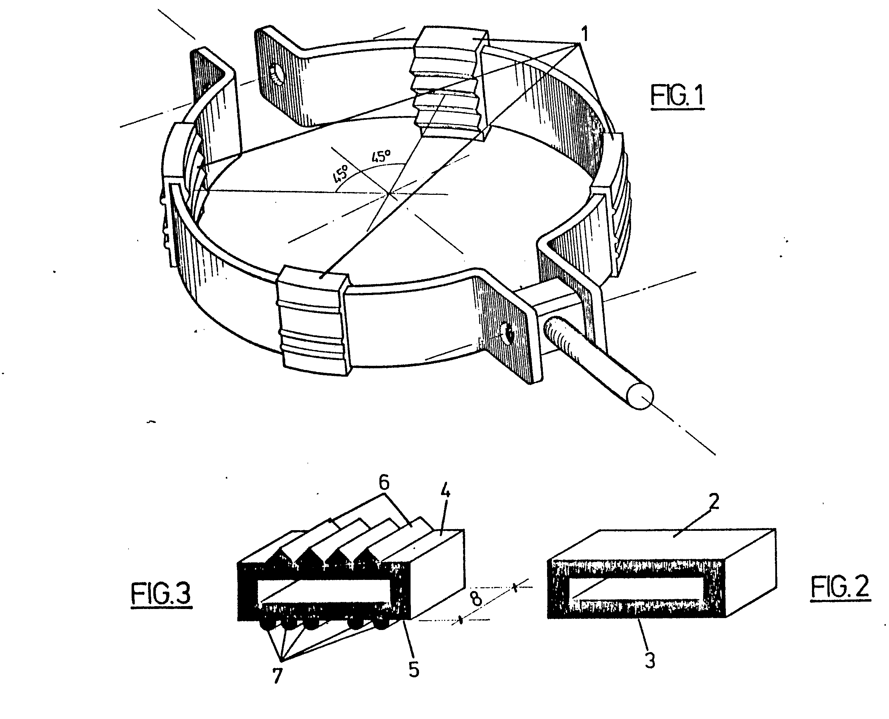

Die Isolierblöcke 1 können die Form kurzer
Rechteckhohlprofile haben. Solche Rechteckhohlprofile, die über die Schellen geschoben
werden und dort aufgrund der Gummispannung
fest anliegen, haben den Vorteil, daß sie
weder bei der Montage noch beim Betrieb der
Rohrleitung heruntergeschoben werden können.
Bei der Montage wird das Rohr innerhalb der
bereits montierten Schelle zum Ausrichten
noch häufig hin und her geschoben, wobei
einige im Handel befindliche Gummiprofile
herausgeschoben werden können. Bei den nach
Inbetriebnahme der Rohrleitung stattfindenden
Längenausdehnungen der Rohrleitung können
große Längskräfte auftreten, die die bekannten
Rohrschellenisoliereinlagen ebenfalls aus
ihrer Lage drücken können. Verwendet man die
Rechteckhohlprofile 1 gemäß Fig. 2 oder Fig. 3,
dann verhindert die das Schellenprofil endlos
umschließende Form das Herausdrücken aus dem
Zwischenraum zwischen Rohr und Schelle.

Ein weiterer wesentlicher Vorteil besteht darin,
daß man die Wandstärken der Breitseiten 2, 3
bzw. 4, 5 der schlauchförmigen Isolierblöcke 1
unterschiedlich dick ausbilden kann. Dadurch ist
es dem Rohrleger an Ort und Stelle möglich,
durch Verdrehen der Rechteckhohlprofile entweder die dicke oder die dünne Breitseite
des schlauchförmigen Isolierblocks dem Rohr
zuzuwenden. Der Rohrleger hat es dann je nach
äußerer Rohrdicke in der Hand, entweder alle
oder einen Teil der schlauchförmigen Isolierblöcke je nach Erfordernis dicker oder dünner zu gestalten, was wiederum eine erhebliche Einsparung an Lagervorhaltung bedeutet.

Die Profilierung der Rohrschellenisolierblöcke gestattet auch die Vergrößerung der Blockmaße gegenüber einem Vollblock gemäß Fig. 2 unter Beibehaltung der Federkonstante, wenn eine größere Auflagefläche zwischen Rohr und Isolierblock oder Schelle und Isolierblock gewünscht wird. Dies könnte der Fall sein bei Kunststoffrohren, welche eine verhältnismäßig weiche Oberfläche haben, so daß eine größere Auflagefläche erwünscht ist.

Ein weiterer Vorteil der vorliegenden Isoliereinlage besteht darin, daß es ohne Beeinträchtigung ihrer Wirkung möglich ist, die Breitseiten 5 der schlauchförmigen Isolierblöcke 1 während des Herstellungsprozesses mit kennzeichnenden, beispielsweise rillenförmigen oder hügelförmigen Längsmarkierungen 7 zu versehen, aus denen der Rohrleger die günstigste Isolierstärke zur Erreichung der gewünschten Eigenfrequenz ablesen kann. ZumBeispiel könnten drei Längsmarkierungen bedeuten, daß die Eigenfrequenz von 50 Hz zu erreichen ist, wenn die gepreßte Dicke einer Breitseite des Isolierblocks unter Vollast 3 mm beträgt. Ebenso könnten die Markierungen auch Auskunft über die den Isolierblock kennzeichnende Federkonstante geben.

Die beschriebene Isoliereinlage erlaubt es, große Hohlräume zwischen Rohr und Rohrschelle zu schaffen, die einen erstklassigen Schallschutz und einen ebenso guten Wärmeschutz ermöglichen.

0159958

Da sich die Isolierblöcke auf der Schelle verschieben lassen, ist die Angleichung der Isolierblöcke an alle denkbaren Lastrichtungen möglich.

Obwohl kurze Rechteckhohlprofile im allgemeinen ihren Zweck voll erfüllen, sind Sonderfälle denkbar, in denen es wünschenswert ist, anstelle der bekannten Rohrschellenisoliereinlagen schlauchförmige Isoliereinlagen zu verwenden, die sich über eine größere Auflagefläche zwischen Rohr und Schelle erstrecken. Derartige schlauchförmige Rohrschellenisoliereinlagen sind konstruktionsbedingt ebenfalls gegen Herausdrücken aus dem Zwischenraum zwischen Rohr und Schelle gesichert. Sie haben gleichzeitig den Vorteil, daß sie sich völlig einwandfrei der Schellenrundung angleichen, und zwar auch bei sehr starken Krümmungen. Derartige schlauchartige Rohrschellenisoliereinlagen empfehlen sich beispielsweise bei kleinen dreigeteilten Schellen, wie sie in der Anmeldung Nr. 83730009.4 beschrieben sind.

Das Rohr soll im vorliegenden Ausführungsbeispiel ein Stahlrohr sein, das zusammen mit dem Medium, das es transportiert, und der Isolierung unter Berücksichtigung des Schellenabstandes ein Gewicht von 135 kg trägt. Zwei der vier gezeichneten Isolierblöcke tragen das Rohr, während zwei weitere, die sich oberhalb des Rohres befinden, nur zur Führung des Rohres dienen. Die Tragfähigkeit der Blöcke beträgt bei der zulässigen Komprimierung der Blöcke von 40 % 0,5 kp/mm$^2$. Da sich die angenommenen 135 kg Rohrgewicht auf zwei Blöcke verteilen und diese Blöcke bezogen auf die senkrechte Lastachse des Rohres im Winkel von $45^{\circ}$ angeordnet sind, entfallen auf jeden Block 95,45 kg. Diese 95 kg werden bereits durch eine rechteckige Fläche von beispielsweise $30 \cdot 6 = 180 \text{ mm}^2$ aufgenommen, so daß der das Rohr tragende Isolierblock sehr klein sein könnte.

Bei einer Grunddicke von 8 mm ist bei 40 % Komprimierung:

$$f = 3,2 \text{ mm}$$

$$c = \frac{9,5}{3,2} = 30 \text{ kg/mm}$$

$$\omega = \frac{1}{2\pi} \cdot \sqrt{\frac{30 \cdot 9810}{3,2}} = 48 \text{ Hz}$$

Bei einer Grunddicke von 6 mm ist bei 40 % Komprimierung:

$$f = 2,4 \text{ mm}$$

$$c = 95/2,4 = 40 \text{ kg/mm}$$

$$\omega = \frac{1}{2\pi} \cdot \sqrt{\frac{40 \cdot 9810}{2,4}} = 65 \text{ Hz}$$

Man kann aus diesem Beispiel ersehen, daß die erwünschte Frequenz von 50 Hz nur mit Gummidicken zu erreichen ist, bei denen ein ringsumlaufendes Gummiprofil unrentabel wäre und in der erforderlichen Weichheit nicht herzustellen wäre. Die Isolierfederblöcke 1 weisen dagegen einen rationellen Weg für die anwendungsgerechte Schall- und Wärmeisolierung in Rohrschellen, weil sie ohne nennenswerten Materialverlust auch in größeren Wanddicken herstellbar sind.

0159958

14

Der Isolierblock nach Fig. 3 weist eine Profilierung 6 an seiner einen Breitseite 4 und eine Markierung 7 in Form eines Profils an seiner anderen Breitseite 5. Die Profilierung 6 an der Breitseite 4 gestattet eine Vergrößerung der Isolierblocklänge ohne Veränderung der Federkonstante oder eine Verkleinerung der Federkonstante bei gleicher Isolierblocklänge.

Die Markierung 7 auf der Breitseite 5 gibt beispielsweise die zulässigen komprimierten Isolierblockdicken beider Breitseiten in Millimeter unter Vollast an, bei denen optimale Dämpfung erreicht wird.

Wenn die Breitseite 4 mit der starken Profilierung 6 zwischen Rohr und Schelle liegt, erlaubt dies die Verwendung eines Rohres mit kleinen Außendurchmessern. Wenn die Breitseite 5 mit der Markierung 7 zwischen Rohr und Schelle liegt, kann ein Rohr größeren Durchmessers verwendet werden.

Patentansprüche

1. Rohrschellenisoliereinlage aus elastischem Material, die zwischen Rohrleitung und Schelle angeordnet ist und als voneinander getrennte Blöcke ausgebildet ist, d a d u r c h  .g e k e n n z e i c h n e t, daß jeder Block (1) aus einem flachen Schlauchstück gebildet ist, das über das Rohrschellenprofil geschoben ist und das gesamte Rohrschellenprofil umschließt.

2. Rohrschellenisoliereinlage nach Anspruch 1, dadurch gekennzeichnet, daß jeder Block (1) auf seinen beiden Breitseiten (4,5) unterschiedliche Wandstärken hat und daß der auf die Schelle geschobene Block (1) derart verdrehbar ist, daß die jeweils gewünschte. zwischen Rohrleitung und Schelle sitzt.

3. Rohrschellenisoliereinlage nach Anspruch 1 oder 2, dadurch gekennzeichnet, daß die Blöcke (1) durch Extrudieren und anschließendes Zerschneiden hergestellt sind.

4. Rohrschellenisoliereinlage nach einem der Ansprüche 1 bis 3, dadurch gekennzeichnet, daß die Blöcke (1) mit ihr Federverhalten beeinflussenden Profilierungen (6) versehen sind.

5. Rohrschellenisoliereinlage nach einem der Ansprüche 1 bis 4, dadurch gekennzeichnet, daß die Blöcke (1) mit Markierungen (7) in Form von Profilierungen versehen sind.

FIG.1

45° 45°

1

FIG.3

6 4

2

8

5

7

3

FIG.2

0159958

**Europäisches Patentamt**

# EUROPÄISCHER RECHERCHENBERICHT

## EINSCHLÄGIGE DOKUMENTE

EP 85730021.4

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE - A1 - 3 025 601 (DAIMLER BENZ AG.)<br><br>* Gesamt *<br><br>-- | 1-5 | F 16 L 3/08<br>F 16 L 55/02 |
| X,P, E | AT - B - 376 024 (DIPA-MATHIAS & RENE DICK GMBH)<br><br>* Gesamt *<br><br>---- | 1-5 | |

|  |
|---|
| RECHERCHIERTE SACHGEBIETE (Int. Cl.4) |
| F 16 L 3/00<br>F 16 L 33/00<br>F 16 L 55/00<br>F 16 L 59/00 |

Der vorliegende Recherchenbericht wurde für alle Patentansprüche erstellt.

| Recherchenort | Abschlußdatum der Recherche | Prüfer |
|---|---|---|
| WIEN | 17-05-1985 | SCHUGANICH |